# EUROPEAN PATENT SPECIFICATION

(11) **EP 2 377 441 B1**
(45) Date of publication and mention of the grant of the patent: **12.03.2014**
(21) Application number: 09832812.3
(22) Date of filing: 15.12.2009
(51) Int. Cl.: A47J 37/08, A21B 1/22, A21B 7/00

(54) **Multifunctional Bread Maker**
Multifunktionaler Brotbackautomat
Machine à pain utilisable de manière multifonctionnelle

(30) Priority: 15.12.2008 CN 200820205490 U
(43) Date of publication of application: 19.10.2011
(73) Proprietor: Wang, Tony, Guangdong 519085 (CN)
(72) Inventor: Wang, Tony, Guangdong 519085 (CN)
(74) Representative: Gervasi, Gemma
(86) International application number: PCT/CN2009/001442
(87) International publication number: WO 2010/069130

(56) References cited:
- WO-A1-89/11773
- CN-A- 1 234 184
- CN-Y- 2 257 692
- CN-Y- 2 300 352
- CN-Y- 2 681 563
- CN-Y- 201 324 160
- US-A- 5 937 740
- US-A1- 2002 104 443
- US-A1- 2006 219 099

## Description

### TECHNICAL FIELD

The present invention relates to a multifunctional bread maker, and more particularly, to a grill of the bread maker for toasting bread in the field of Household Appliances.

### BACKGROUND OF THE INVENTION

The grill of the bread maker in the prior art comprises an integral and non-detachable shelf and trays with curved cross-section. The shelf and trays of the bread maker with such structures occupy much space when in package and in transit, and they are not convenient for the consumers in storage.

Moreover, the bread maker in the prior art needs to be provided with a grill in the interior of the toasting cavity. The trays are placed on the grill and electrical heating tubes are disposed around the interior of the toasting cavity. Since the electrical heating tubes toast directly the places where the trays are located, heat distribution is uneven, which results in that the bread is burnt partially and the product quality is affected

Document US 5 937 740 discloses a multifunctional bread maker. A cooking plate can be removably mounted within the oven chamber in exchange for the bread vessel.

### SUMMARY OF THE INVENTION

The present invention is aimed at providing a multifunctional bread maker which makes the oven to be heated evenly and which is simple in structure and convenient for use.

The present invention is achieved by the following technical scheme:
A multifunctional bread maker, comprises a casing, an oven disposed inside the casing, a door or a cover for closing the oven; and further comprises a bread bucket which has an upward opening and is easily loaded and unloaded, more than one set of support device for toasting food; the bread bucket is loaded in a cavity of the oven when it is necessary to use the bread bucket to make bread, and the support device for toasting food is loaded in the cavity of the oven when it is necessary to use the support device for toasting food to toast food; the support device for toasting food comprises a grill and toasting pans; and heating elements disposed in the cavity of the oven, wherein the heating elements are electrical heating tubes which are disposed around an inner periphery of the cavity of the oven; the grill is removably disposed in the cavity of the oven; toasting pans are removably disposed on the grill; a baffle for shielding the electrical heating tubes is disposed between the toasting pans and the electrical heating tubes; and there is clearance between the baffle and the toasting pans, and between the baffle and the electrical heating tubes.

In summary, the present invention has following advantages:
In the multifunctional bread maker of the present invention, the heating elements are electrical heating tubes which are disposed around the inner periphery of the cavity of the oven. The grill is removably disposed in the cavity of the oven. The toasting pans are removably disposed on the grill. The baffle for shielding the electrical heating tubes is disposed between the toasting pans and the electrical heating tubes. There is clearance between the baffle, the toasting pans and the electrical heating tubes. The heat in the cavity of the oven of the bread maker is transferred evenly, which can protect the bread toasted from being burnt partially.

### BRIEF DESCRIPTION OF THE DRAWING

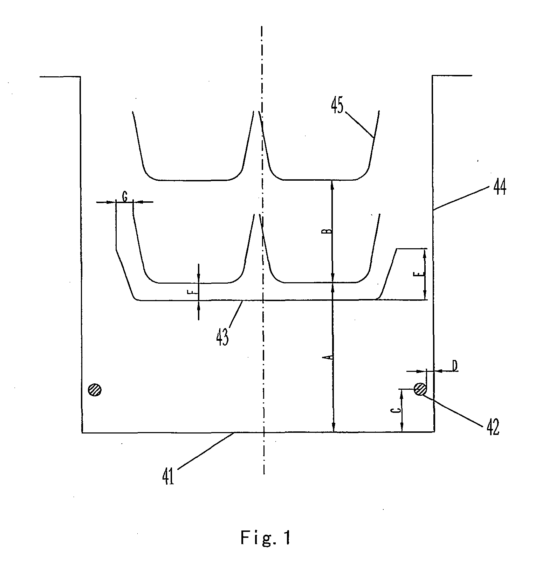

Fig. 1 is a schematic view illustrating the multifunctional bread maker of the present invention.

### DETAILED DESCRIPTION OF THE PREFERRED EMBODIMENTS

The present invention discloses a multifunctional bread maker which comprises a casing, an oven disposed inside the casing, a door or a cover for closing the oven. The bread maker further comprises a bread bucket which has an upward opening and is easily loaded and unloaded, more than one set of support device for toasting food. The bread bucket is loaded in a cavity of the oven when it is necessary to use the bread bucket to make bread, and the support device for toasting food is loaded in the cavity of the oven when it is necessary to use the support device for toasting food toast food. The support device for toasting food comprises a grill and toasting pans. Heating elements are disposed in the cavity of the oven. As shown in Fig.1, the heating elements are electrical heating tubes 42 which are disposed around the inner periphery of the cavity of the oven 41. The grill not shown is removably disposed in the cavity of the oven, and the toasting pans 45 are removably disposed on the grill. A baffle 43 for shielding the electrical heating tubes 42 is disposed between the toasting pans 45 and the electrical heating tubes 42. There is clearance between the baffle 43 and the toasting pans 45, and between the baffle 43 and the electrical heating tubes 42.

The grill has at least two levels.

Distance A between the bottom of the lower toasting pan 45 and the bottom of the oven 41 is ranged from 70mm to 120mm. Distance C between the electrical heating tubes 42 and the bottom of the oven 41 is ranged from 20mm to 60mm. Distance D between the electrical heating tubes 42 and the walls of the oven 41 is ranged from 4mm to 10mm. Height E of the wings of the baffle 43 is ranged from 20mm to 60mm. Distance B between the bottom of the lower toasting pan and the bottom of the upper toasting pan is ranged from 50mm to 70mm. Distance F between the bottom of the lower toasting pan and the baffle 43 is ranged from 5mm to 15mm. Horizontal clearance G between the top end of the baffle 43 and the top end of the lower toasting pan is ranged from 5mm to 10mm.

Cross-section of the toasting pan is in the shape of a trapezium. Slight fillets are formed between the bottom and sides of the trapezium, and the fillet has a radius less than or equal to 3mm.

The baffle 43 is heat-insulated.

The preferred embodiments described above are not restricted. It will be understood by those skilled in the art that various modifications and changes may be made therein without departing from the scope of the invention.

## Claims

1. A multifunctional bread maker, comprising a casing, an oven disposed inside the casing, a door or a cover for closing the oven; and further comprising a bread bucket which has an upward opening and is easily loaded and unloaded, more than one set of support device for toasting food; the bread bucket loaded in a cavity of the oven when it is necessary to use the bread bucket to make bread, and the support device for toasting food loaded in the cavity of the oven when it is necessary to use the support device for toasting food to toast food; the support device for toasting food comprises a grill and toasting pans; and heating elements disposed in the cavity of the oven, **characterized in that**: the heating elements are electrical heating tubes (42) which are disposed around an inner periphery of the cavity of the oven (41); the grill is removably disposed in the cavity of the oven; toasting pans (45) are removably disposed on the grill; a baffle (43) for shielding the electrical heating tubes (42) is disposed between the toasting pans (45) and the electrical heating tubes (42); and there is clearance between the baffle (43) and the toasting pans (45), and between the baffle (43) and the electrical heating tubes (42).

2. The multifunctional bread maker according to claim 1, **characterized in that**: the grill has at least two levels.

3. The multifunctional bread maker according to claim 2, **characterized in that**: distance A between a bottom of a lower toasting pan and a bottom of the oven (41) is ranged from 70mm to 120mm; distance C between the electrical heating tubes (42) and the bottom of the oven (41) is ranged from 20mm to 60mm; distance D between the electrical heating tubes (42) and walls of the oven (41) is ranged from 4mm to 10mm; height E of wings of the baffle (43) is ranged from 20mm to 60mm; distance B between the bottom of the lower toasting pan and the bottom of an upper toasting pan is ranged from 50mm to 70mm; distance F between the bottom of the lower toasting pan and the baffle (43) is ranged from 5mm to 15mm; and horizontal clearance G between a top end of the baffle (43) and a top end of the lower toasting pan is ranged from 5mm to 10mm.

4. The multifunctional bread maker according to claim 1, 2 or 3, **characterized in that**: cross-section of the toasting pan is in the shape of a trapezium; slight fillets are formed between a bottom and sides of the trapezium, and the fillet has a radius less than or equal to 3mm.

5. The multifunctional bread maker according to claim 4, **characterized in that**: the baffle (43) is heat-insulated.

## Patentansprüche

1. Multifunktionaler Brotbackautomat, umfassend ein Gehäuse, einen Ofen, der in dem Gehäuse angeordnet ist, eine Tür oder einen Deckel zum Schließen des Ofens; und weiter umfassend einen Brotbehälter, der eine nach oben gerichtete Öffnung aufweist und leicht zu beladen und zu entladen ist, mehr als einen Satz einer Unterstützungsvorrichtung zum Rösten von Nahrungsmitteln; wobei der Brotbehälter in einen Hohlraum des Ofens geladen wird, wenn es erforderlich ist, den Brotbehälter zu verwenden, um Brot zu machen, und die Unterstützungsvorrichtung zum Rösten von Nahrungsmitteln in den Hohlraum des Ofens geladen wird, wenn es erforderlich ist, die Unterstützungsvorrichtung zum Rösten von Nahrungsmitteln zu verwenden, um Nahrungsmittel zu rösten; wobei die Unterstützungsvorrichtung zum Rösten von Nahrungsmitteln einen Grill und Röstpfannen umfasst; und Heizelemente, die in dem Hohlraum des Ofens angeordnet sind, **dadurch gekennzeichnet, dass** die Heizelemente elektrische Heizrohre (42) sind, die um einen Innenumfang des Hohlraums des Ofens (41) angeordnet sind; der Grill abnehmbar in dem Hohlraum des Ofens angeordnet ist; Röstpfannen (45) abnehmbar auf dem Grill angeordnet sind; eine Trennwand (43) zum Abschirmen der elektrischen Heizrohre (42) zwischen den Röstpfannen (45) und den elektrischen Heizrohren (42) angeordnet ist; und es einen Abstand zwischen der Trennwand (43) und den Röstpfannen (45) und zwischen der Trennwand (43) und den elektrischen Heizrohren (42) gibt.

2. Multifunktionaler Brotbackautomat nach Anspruch 1, **dadurch gekennzeichnet, dass** der Grill mindestens zwei Ebenen aufweist.

3. Multifunktionaler Brotbackautomat nach Anspruch 2, **dadurch gekennzeichnet, dass** der Abstand A zwischen einem Boden einer unteren Röstpfanne und einem Boden des Ofens (41) im Bereich von 70 mm bis 120 mm liegt; der Abstand C zwischen den elektrischen Heizrohren (42) und dem Boden des Ofens (41) im Bereich von 20 mm bis 60 mm liegt; der Abstand D zwischen den elektrischen Heizrohren (42) und den Wänden des Ofens (41) im Bereich von 4 mm bis 10 mm liegt; die Höhe E der Flügel der Trennwand (43) im Bereich von 20 mm bis 60 mm liegt; der Abstand B zwischen dem Boden der unteren Röstpfanne und dem Boden von einer oberen Röstpfanne im Bereich von 50 mm bis 70 mm liegt; der Abstand F zwischen dem Boden der unteren Röstpfanne und der Trennwand (43) im Bereich von 5 mm bis 15 mm liegt; und der horizontale Abstand G zwischen einem oberen Ende der Trennwand (43) und einem oberen Ende der unteren Röstpfanne im Bereich von 5 mm bis 10 mm liegt.

4. Multifunktionaler Brotbackautomat nach Anspruch 1, 2 oder 3, **dadurch gekennzeichnet, dass** der Querschnitt der Röstpfanne in der Form von einem Trapez ist; geringfügige Ausrundungen zwischen einem Boden und den Seiten des Trapezes ausgebildet sind, und die Ausrundung einen Radius aufweist, der kleiner als oder gleich 3 mm ist.

5. Multifunktionaler Brotbackautomat nach Anspruch 4, **dadurch gekennzeichnet, dass** die Trennwand (43) wärmeisoliert ist.

## Revendications

1. Machine à pain multifonctionnelle comprenant un boîtier, un four disposé dans le boîtier, une porte ou un couvercle pour fermer le four ; et comprenant en outre une cuve à pain qui présente une ouverture vers le haut et est facilement chargée et déchargée, plus d'un ensemble de dispositif porteur pour faire griller la nourriture ; la cuve à pain étant chargée dans une cavité du four lorsqu'il est nécessaire d'utiliser la cuve à pain pour faire du pain, et le dispositif porteur pour faire griller la nourriture étant chargé dans la cavité du four lorsqu'il est nécessaire d'utiliser le dispositif porteur pour faire griller la nourriture pour faire griller la nourriture ; le dispositif porteur pour faire griller la nourriture comprenant un grill et des plats à griller ; et des éléments chauffants disposés dans la cavité du four, **caractérisée en ce que** : les éléments chauffants sont des tubes chauffants électriques (42) qui sont disposés autour d'une périphérie intérieure de la cavité du four (41) ; le grill est disposé de manière amovible dans la cavité du four ; les plats à griller (45) sont disposés de manière amovible sur le grill ; un écran (43) pour protéger les tubes chauffants électriques (42) est disposé entre les plats à griller (45) et les tubes chauffants électriques (42) ; et il y a un espacement entre l'écran (43) et les plats à griller (45) et entre l'écran (43) et les tubes chauffants électriques (42).

2. Machine à pain multifonctionnelle selon la revendication 1, **caractérisée en ce que** le grill présente au moins deux niveaux.

3. Machine à pain multifonctionnelle selon la revendication 2, **caractérisée en ce que** la distance A entre un fond d'un plat à griller inférieur et un fond du four (41) varie de 70 à 120 mm ; la distance C entre les tubes chauffants électriques (42) et le fond du four (41) varie de 20 à 60 mm ; la distance D entre les tubes chauffants électriques (42) et les parois du four (41) varie de 4 à 10 mm ; la hauteur E d'ailes de l'écran (43) varie de 20 à 60 mm ; la distance B entre le fond du plat à griller inférieur et le fond d'un plat à griller supérieur varie de 50 à 70 mm ; la distance F entre le fond du plat à griller inférieur et l'écran (43) varie de 5 à 15 mm ; et l'espacement horizontal G entre une extrémité supérieure de l'écran (43) et une extrémité supérieure du plat à griller inférieur varie de 5 à 10 mm.

4. Machine à pain multifonctionnelle selon la revendication 1, 2 ou 3, **caractérisée en ce que** la section du plat à griller présente une forme de trapèze ; de minces flancs sont formés entre un fond et des côtés du trapèze, et le flanc présente un rayon inférieur ou égal à 3 mm.

5. Machine à pain multifonctionnelle selon la revendication 4, **caractérisée en ce que** l'écran (43) est calorifugé.
